# EUROPEAN PATENT APPLICATION

(11) **EP 3 293 688 A1**
(43) Date of publication of application: **14.03.2018**
(21) Application number: 16789272.8
(22) Date of filing: 21.04.2016
(51) Int. Cl.: G06Q 30/00, G06F 17/30

(54) **METHOD AND SYSTEM FOR MATCHING SERVICE SCENE**

(30) Priority: 04.05.2015 CN 201510221616
(71) Applicant: Alibaba Group Holding Limited, Grand Cayman (KY)
(72) Inventor: SHEN, Dong, Hangzhou 310099 (CN); XIAO, Hanping, Hangzhou 310099 (CN); LIU, Tangheng, Hangzhou 310099 (CN); YE, Jiajie, Hangzhou 310099 (CN)
(74) Representative: Kunz, Herbert
(86) International application number: PCT/CN2016/079811
(87) International publication number: WO 2016/177278

(57) **Abstract**

Embodiments of the present application disclose a service scenario matching method and system. A service scenario matching method includes: acquiring user features of access users corresponding to different scenarios and matching features of a to-be-matched product; calculating a user feature mapping value of each scenario based on the matching features of the to-be-matched product; and selecting a service scenario of the to-be-matched product according to the user feature mapping values. By using the embodiments of the present application, a user feature mapping value that is more relevant to the to-be-matched product may be calculated, thereby being conducive to selecting a corresponding scenario according to the user feature mapping value obtained through calculation, to serve as a service scenario of the to-be-matched product.

## Description

### Technical Field

The present application relates to the field of Internet technologies, and in particular, to a service scenario matching method and system.

### Background Art

In the Internet technologies, a user can access diversified pages provided by a website service provider or an application service provider via a browser or an application or in other manners. A website or a service provider classifies and collects different pages to form different scenarios.

A scenario may correspond to a web page or a set of a series of web pages having a hierarchical structure, and may also include a page popped up after a page button is clicked. A common scenario is that, for example, web pages are classified and collected according to a subject and/or function thereof.

For example, as a large portal website, sina.com is provided with the following sub-sites having different scenarios, and each sub-site can collect multiple pages:

| | |
|---|---|
| Sina Technology | tech.sina.com.cn |
| Sina Sports | sports.sina.com.cn |
| Sina News | news.sina.com.cn |
| Sina Finance | finance.sina.com.cn |

Each sub-site scenario may further involve multiple specific scenarios. For example, Sina Sports (sports.sina.com.cn) further includes multiple scenarios such as NBA, CBA, Chinese football, and international football; Sina Technology further includes multiple scenarios such as mobile phones, cameras, and household appliances, and so on.

Access entries for different types of services may be set in a mobile Internet application, for example, an application installed on a mobile terminal. For example, a home page of the Alipay™ Wallet may be set to include access entries of different types of services, such as airplane ticket, film, taxi, and express delivery. The scenario may also correspond to these different access entries.

A website service provider or application service provider needs to set further service interfaces in different scenarios. For example, a service interface for newcomer Xingxing Express may need to be set on a page redirected from an express delivery access entry on an application of a mobile terminal. For example, a website service provider needs to set a service interface for newcomer automobiles of a certain brand on an automobile sub-site, e.g., a page of a related service interface (such as a purchase consulting or purchase appointment) of the automobile of the brand is popped up after a page button is clicked. For example, moreover, advertisements are set in different scenarios. Here, the set content may be referred to as a product, such as the above Xingxing Express, activity promotion of automobiles of a brand, and advertisements.

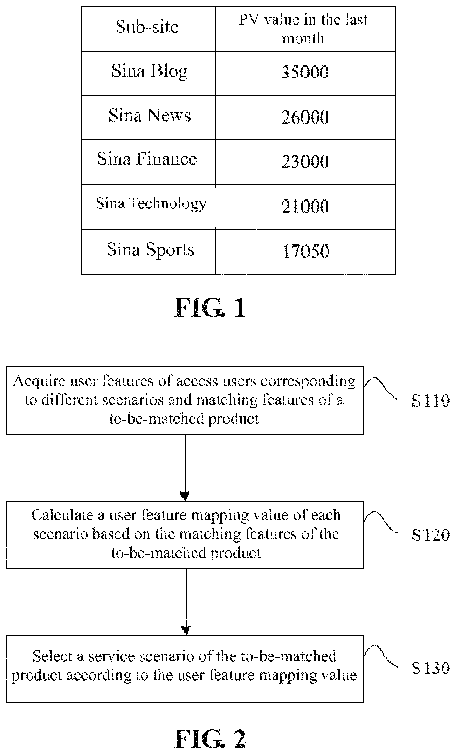

In the prior art, a website service provider or application service provider generally determines a scenario to which a product should be adapted based on page views of scenarios. For example, which one of the various scenarios of Sina an automobile product should be adapted to is generally determined simply according to page views of the scenarios. The Page View generally includes the amount of page views or hits. Generally, the amount of page views or hits of a page is increased by one every time a user refreshes the page. Correspondingly, page views of pages in a scenario may be counted as the page view of the scenario. For example, the ranking of major sub-sites of Sina in the last month according to a total number of page views may be as shown in FIG. 1. As shown in FIG. 1, Sina Blog has the maximum page view, then the automobile product is generally adapted to this scenario in the prior art, and a service interface is set in the scenario of Sina Blog for the automobile product. For another example, in the prior art, a service interface of Xingxing Express is likewise adapted to a taxi scenario in an application based on page views of different scenarios.

In the process of implementing the present application, the inventor finds that the prior art has at least the following problem.

Adapting a product to a scenario according to a page view or the like is rough, and it is difficult to adapt the product to a really suitable scenario. For example, setting a service interface in the scenario of Sina Blog for the automobile product is not a good choice, and the scenario of Sina Automobile may be a better choice. Setting the above Xingxing Express in the scenario of express delivery is a better choice.

### Summary of the Invention

An objective of embodiments of the present application is to provide a service scenario matching method and system, to match a product to a more suitable scenario.

To solve the above technical problem, the embodiments of the present application provide a service scenario matching method and system, which are implemented as follows:

A service scenario matching method includes:
acquiring user features of access users corresponding to different scenarios and matching features of a to-be-matched product;
calculating a user feature mapping value of each scenario based on the matching features of the to-be-matched product; and
selecting a service scenario of the to-be-matched product according to the user feature mapping values.

A service scenario matching system includes:
an acquisition unit configured to acquire user features of access users corresponding to different scenarios and matching features of a to-be-matched product;
a calculation unit configured to calculate a user feature mapping value of each scenario based on the matching features of the to-be-matched product; and
a selection unit configured to select a service scenario of the to-be-matched product according to the user feature mapping values.

It can be seen from the above technical solutions provided in the embodiments of the present application that, in the embodiments of the present application, a user feature mapping value of each scenario is calculated based on the matching features of the to-be-matched product, and therefore, a user feature mapping value that is more relevant to the to-be-matched product can be calculated, thereby being conducive to selecting a corresponding scenario according to the user feature mapping value obtained through calculation, to serve as a service scenario of the to-be-matched product. For example, according to the manner of the prior art, if only the page view PV is considered, it is possible that a scenario 4 (e.g., an automobile scenario) is higher than a scenario 3 (an express delivery product) from the overall perspective; however, for the newly introduced Xingxing Express as a to-be-matched product, the scenario 3 is obviously more suitable to serve as an interface setting page for the newly introduced Xingxing Express. In this way, by means of the embodiments of the present application, the user feature mapping value of each scenario is calculated in consideration of the characteristics of the to-be-matched product, i.e., with reference to the matching features of the to-be-matched product. Therefore, the degree of fit between different scenarios and the to-be-matched product can be reflected more truly, thereby helping to select a suitable service scenario.

### Brief Description of the Drawings

To describe the technical solutions in the embodiments of the present application or the prior art more clearly, the following briefly introduces the accompanying drawings required for describing the embodiments or the prior art. Apparently, the accompanying drawings described in the following are merely some embodiments recorded in the present application, and a person of ordinary skill in the art may still derive other drawings from these accompanying drawings without creative efforts.
FIG. 1 is a schematic diagram of ranking major sub-sites of Sina in the last month according to a total number of page views according to the present application;
FIG. 2 is a flowchart of a method embodiment according to the present application;
FIG. 3 is a module diagram of a system embodiment according to the present application;
FIG. 4 is a module diagram of a system embodiment according to the present application; and
FIG. 5 is a module diagram of a system embodiment according to the present application.

### Detailed Description

The embodiments of the present application provide a service scenario matching method and system.

In order that a person skilled in the art can better understand the technical solution in the present application, the technical solutions in the embodiments of the present application will be described clearly and completely below through the accompanying drawings in the embodiments of the present application. Apparently, the described embodiments are merely a part of embodiments of the present application, rather than all the embodiments. Based on the embodiments of the present application, all other embodiments derived by a person of ordinary skill in the art without any creative effort shall all fall within the protection scope of the present application.

An embodiment of a service scenario matching method according to the present application is shown in FIG. 2, including:
S110: User features of access users corresponding to different scenarios and matching features of a to-be-matched product are acquired.

Generally, a user accesses, through a terminal or an application, different scenarios set by a website service provider or an application service provider. A server of the website service provider or the application service provider can obtain or record user features of the access user. These user features, for example, may include some registration information of the user, such as ID, gender, and age, may also include concerns set by the user, such as registered interests, subscribed layouts, and favorite pages, and may also include recorded historical behaviors conducted by the user with respect to the website or the application, such as a maternal and infant class aggregate amount, a household appliance class aggregate amount, or an outdoors class aggregate amount generated in a shopping website or application. The above features may be used as a basis for evaluating user feature mapping values of different scenarios subsequently. Specifically, the user features may be acquired from access records and/or registration information.

The access features are, for example, in the form of {X1, X2, X3, ...}, wherein X1, X2 and X3 may specifically represent the following content:
{ID, gender, age, concerned scenarios, interests, subscribed layouts, favorite pages, purchase records, maternal and infant class aggregate amount, household appliance class aggregate amount, outdoors class aggregate amount, ...}

Each user may have all the above access features, and may have not completely identical access features.

Different access user groups may be concentrated in different scenarios. For example, a scenario 1 may include users M1, M2, M3, ..., M100; a scenario 2 may include users N1, N2, N3, ..., N50; a scenario 3 may include users P1, P2, P3, ..., P500; and a scenario 4 may include users Q1, Q2, Q3, ..., Q300. Definitely, it is not excluded that access users corresponding to different scenarios are partially overlapped or totally overlapped.

In this way, a server of the website service provider or application service provider can obtain user features of the access users corresponding to different scenarios.

As described above, the to-be-matched product may be a product that needs to be adapted to a really suitable scenario. Generally, different to-be-matched products have different matching features. For example, for a maternal and infant class product, such as a maternal and infant class advertisement or application interface, when a matching scenario is set, the gender, age, concerned scenarios, interests, favorite pages, purchase records, and maternal and infant class aggregate amount may be more concerned. The above concerned content is generally embodied in the user features. For another example, for an automobile product, for example, a purchase consulting interface for an automobile class product, when a matching scenario is set, features such as interests, subscribed layouts, favorite pages, and purchase records may be more concerned. For different to-be-matched products, corresponding matching features may be determined according to the predetermined selection.

In this way, the server of the website service provider or application service provider can obtain the matching features of the to-be-matched product.

S120: A user feature mapping value of each scenario is calculated based on the matching features of the to-be-matched product.

As described above, different to-be-matched products generally have different matching features. User feature mapping values of different scenarios may be calculated based on the matching features of the to-be-matched products.

For example, the to-be-matched product has matching features {X2, X3, X5, X8}. In different scenarios, a user feature mapping value of each scenario may be calculated according to the matching features of the to-be-matched product.

Specifically, as described above, feature values corresponding to X2, X3, X5 and X8 in user features of each user in the scenario 1 may be quantified, overlapped, and then averaged, to serve as a user feature mapping value of the scenario, for example, a user feature mapping value _{scenario 1}. Feature values corresponding to X2, X3, X5 and X8 in user features of each user in the scenario 2 may be quantified, overlapped, and then averaged, to serve as a user feature mapping value of the scenario, for example, a user feature mapping value _{scenario 2}. In the premise of having a same quantification principle, a relative numerical value that basically truly reflects the relative degree of fit between the scenario and the to-be-matched product can be obtained by using such a calculation manner.

For example, the user feature mapping value _{scenario 1}=1.5, and the user feature mapping value _{scenario 2}=2.7.

For another example, feature values corresponding to X2, X5, X5 and X8 in user features of each user in the scenario 3 may be quantified and overlapped, to serve as a user feature mapping value of the scenario, for example, a user feature mapping value _{scenario 3}. Feature values corresponding to X2, X3, X5 and X8 in user features of each user in the scenario 4 may be quantified, overlapped, and then averaged, to serve as a user feature mapping value of the scenario, for example, a user feature mapping value _{scenario 4}. Likewise, in the premise of having a same quantification principle, a relative numerical value that basically truly reflects the relative degree of fit between the scenario and the to-be-matched product can be obtained by using such a calculation manner.

For example, the user feature mapping value _{scenario 3}=15000, and the user feature mapping value _{scenario 4}=7280.

In view of the above, first user features corresponding to the matching features of the to-be-matched product among the user features of the access users corresponding to different scenarios are quantified according to a same standard, and the user feature mapping values of the first user features of the different scenarios are obtained based on a same mapping rule, so as to obtain the user feature mapping value of each scenario that serves as a subsequent selection standard.

S130: A service scenario of the to-be-matched product is selected according to the user feature mapping value.

Generally speaking, a scenario where the matching features of to-be-matched product are more repeated among different scenarios is more fit for the to-be-matched product. In this way, a scenario having a high user feature mapping value may be selected as the service scenario of the to-be-matched product. For example, the scenario 3 has more users, and correspondingly, the user feature mapping value _{scenario 3} has more repeated matching features, and therefore, the user feature mapping value _{scenario 3} is obviously greater than the user feature mapping value _{scenario 4}. In this way, the scenario 3 is more fit for the service scenario of the to-be-matched product than the scenario 4.

Further, access users in a current scenario repeat the matching features of the to-be-matched product more will enable the current scenario more fit for the to-be-matched product. For example, the to-be-matched product is a maternal and infant product, and access users purchasing the maternal and infant product are mainly concentrated in the scenario 2. In this way, the access users in the scenario 2 have relatively high influences on the user feature mapping value of the scenario in terms of some matching features, for example, influences caused by relatively high maternal and infant class aggregate amount. In this way, even the access users in the scenario 2 are obviously less than those in the scenario 1, according to the calculation manner in the above S120, it can be obtained that the user feature mapping value _{scenario 1} is obviously less than the user feature mapping value _{scenario 2}. In this way, the scenario 2 is more fit for the service scenario of the to-be-matched product than the scenario 1.

Definitely, according to characteristics of the to-be-matched product, a scenario where the matching features of to-be-matched product are less repeated among different scenarios may be more fit for the to-be-matched product. In this way, a scenario having a low user feature mapping value may be selected as the service scenario of the to-be-matched product. This is not limited herein.

Based on the above embodiments of the present application, a user feature mapping value of each scenario is calculated based on matching features of the to-be-matched product, and therefore, a user feature mapping value that is more relevant to the to-be-matched product can be calculated, thereby being conducive to selecting a corresponding scenario according to the user feature mapping value obtained through calculation, to serve as a service scenario of the to-be-matched product.

For example, according to the manner of the prior art, if only the page view PV is considered, it is possible that a scenario 4 (e.g., an automobile scenario) is higher than a scenario 3 (an express delivery product) from the overall perspective; however, for the newly introduced Xingxing Express as a to-be-matched product, the scenario 3 is obviously more suitable to serve as an interface setting page for the newly introduced Xingxing Express. In this way, by means of the embodiments of the present application, the user feature mapping value of each scenario is calculated in consideration of the characteristics of the to-be-matched product, i.e., with reference to the matching features of the to-be-matched product. Therefore, the degree of fit between different scenarios and the to-be-matched product can be reflected more truly, thereby helping to select a suitable service scenario.

In the above step S110, the matching features of the to-be-matched product may be further implemented automatically in addition to being determined according to the predetermined selection. For processing of a large data volume, a rule may be found from the big data by means of a mature big data processing technology through setting of proper functions. For example, a machine learning method such as logistic regression, Gradient Boosting Decision Tree (GBDT), decision tree, or even deep learning can be used for modeling these big data, thereby acquiring potential major features of users using this type of product, i.e., matching features of the to-be-matched product. Moreover, a relationship between the features and weights thereof may be further obtained by means of the above big data processing method, thereby obtaining a uniform equation or calculation formula. It comes down to a feature extraction problem that is relatively standard and targeted. There are a variety of universal algorithms that can be attempted in the art, and algorithms applicable and corresponding to different data and services have respective focuses. In the following, by taking the Logistic regression as an example, the present application illustrates how to obtain suitable matching features by modeling, and how to obtain user feature mapping values ranging from 0 to 1 based on the matching features in different scenarios.

Major features may be selected through logistic regression implementation. It is also referred to as major component analysis in some machine learning algorithms. The major features are features mainly concerned by the product when the matching scenario is reflected. It specifically includes the following:
A1: All user features are set according to users and whether each user uses a target product is marked. For example, user features of 500 users in 1000 dimensions are set as rows according to the users, and whether a user uses a target product is marked behind a user feature of the user. For example, the target product is marked as 1 if being used by the user, and is marked as 0 if being not used. The marking may be embodied by using a data table.
A2: An Information Value between all user features of each user in A1 and whether the target product is used is calculated. For example, an influence degree in each dimension on whether a user uses the target product may be calculated through major component analysis, and such influence degree is used as a factor obtained through calculation, that is, the above information value.
A3: Ranking is performed according to the Information Values, and features in a maximum preset number of dimensions are reserved. For example, after the features in 1000 dimensions are ranked according to the Information Values, features in the first 200 dimensions are reserved from large to small.
A4: Fitting operation is performed through a logistic regression algorithm on the features in a preset number of dimensions reserved by each user and whether the user uses the target product. Non-significant indexes are excluded and significant indexes are reserved according to a statistical significance requirement (p_value) in the logistic regression algorithm.

By means of the above manner, less dimensions most relevant to whether the user uses a product may be found from the numerous dimensions by using the logistic regression algorithm, thus obtaining the matching features of the to-be-matched product.

In the above A4, by means of the fitting operation, as well as excluding non-significant indexes and reserving significant indexes and corresponding coefficients according to the statistical significance requirement (p_value), a mapping relationship between the matching features and the user feature mapping values may be further obtained, for example, a mapping relationship between the matching features of each user to the user feature mapping value whose final value range is [0, 1]. Therefore, a user feature mapping value of each scenario may be calculated based on the matching features of the to-be-matched product by using the mapping relationship in S120. As the mapping relationship is obtained through collecting, attempting, and tendency simulation on big data by using the logistic regression algorithm, it can better reflect the relationship between the user features and the matching features and the relationship between the matching features and the user feature mapping values.

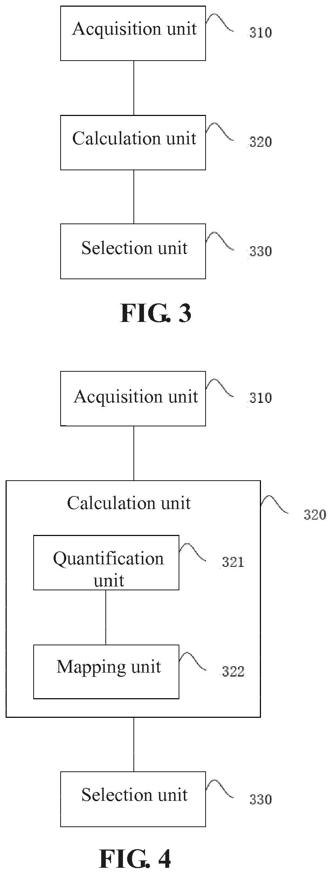

An embodiment of a unit service scenario matching system according to the present application is introduced below with reference to FIG. 3. As shown in FIG. 3, the system includes:
an acquisition unit 310 configured to acquire user features of access users corresponding to different scenarios and matching features of a to-be-matched product;
a calculation unit 320 configured to calculate a user feature mapping value of each scenario based on the matching features of the to-be-matched product; and
a selection unit 330 configured to select a service scenario of the to-be-matched product according to the user feature mapping values.

Preferably, the acquisition unit 310 may include a first acquisition unit 311 configured to acquire the user features of the access users corresponding to different scenarios from access records and/or registration information.

Preferably, the acquisition unit 310 may include a second acquisition unit 312 configured to determine the matching features of the to-be-matched product according to a predetermined selection.

Preferably, as shown in FIG. 4, the calculation unit 320 may include a quantification unit 321 and a mapping unit 322, wherein:
the quantification unit 321 is configured to quantify first user features corresponding to the matching features of the to-be-matched product among the user features of the access users corresponding to different scenarios according to a same standard; and
the mapping unit 322 is configured to obtain the user feature mapping values of the first user features of the different scenarios based on a same mapping rule.

Preferably, the selection unit may select a scenario having a low user feature mapping value as the service scenario of the to-be-matched product; or a scenario having a high user feature mapping value as the service scenario of the to-be-matched product.

Preferably, the acquiring matching features of the to-be-matched product by the acquisition unit may be acquiring the matching features of the to-be-matched product by using a machine learning method.

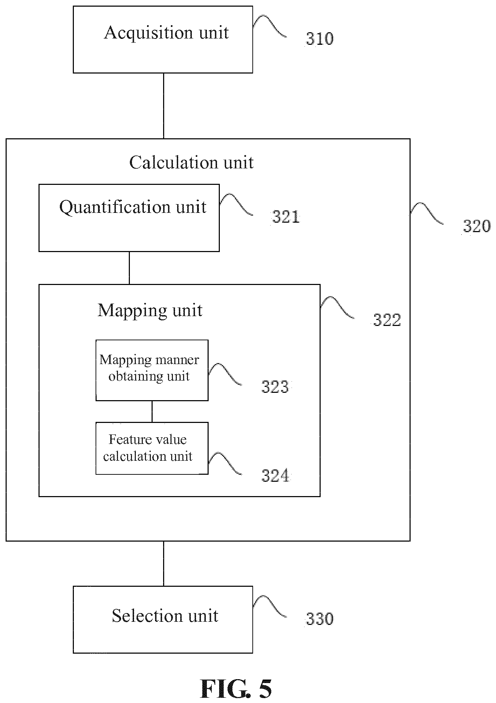

Preferably, as shown in FIG. 5, the mapping unit 322 may include a mapping manner obtaining unit 323 and a feature value calculation unit 324, wherein:
the mapping manner obtaining unit 323 is configured to obtain a first mapping manner by using a machine learning method; and
the feature value calculation unit 324 is configured to calculate the user feature mapping value of each scenario by using the first mapping manner.

Preferably, the machine learning method may include at least one of a logistic regression algorithm, a GBDT algorithm, a decision tree algorithm, and a deep learning algorithm.

In the 1990s, an improvement on a technology may be obviously distinguished as an improvement on hardware (for example, an improvement on a circuit structure such as a diode, a transistor, and a switch) or an improvement on software (an improvement on a method procedure). However, with the development of technologies, improvements of many method procedures at present may be considered as direct improvements on hardware circuit structures. Almost all designers program the improved method procedures into hardware circuits to obtain corresponding hardware circuit structures. Therefore, it cannot be assumed that the improvement on a method procedure cannot be implemented by using a hardware entity module. For example, a Programmable Logic Device (PLD) (for example, a Field Programmable Gate Array (FPGA)) is such an integrated circuit, and logic functions thereof are determined by a user programming devices. Designers program by themselves to "integrate" a digital system into a piece of PLD, without the need that a chip manufacturer designs and manufactures a dedicated integrated circuit chip 2. Moreover, at present, the programming that is in place of manually manufacturing an integrated circuit chip is mostly implemented by using "logic compiler" software. The software is similar to a software complier used for developing and writing a program, and original codes before compiling also need to be written in a specific programming language, which is referred to as a Hardware Description Language (HDL). There are many types of HDLs, such as ABEL (Advanced Boolean Expression Language), AHDL (Altera Hardware Description Language), Confluence, CUPL (Cornell University Programming Language), HDCal, JHDL (Java Hardware Description Language), Lava, Lola, MyHDL, PALASM, and RHDL (Ruby Hardware Description Language), among which VHDL (Very-High-Speed Integrated Circuit Hardware Description Language) and Verilog2 are the most commonly used at present. Persons skilled in the art also should know that a hardware circuit for implementing the logic method procedure may be easily obtained only by slightly conducting logical programming on the method procedure using the above several hardware description languages and programming it into an integrated circuit.

A controller may be implemented in any suitable manner. For example, the controller may be in the form of, for example, a microprocessor or a processor and a computer readable medium storing computer readable program codes (for example, software or firmware) executable by the (micro)processor, a logic gate, a switch, an Application Specific Integrated Circuit (ASIC), a programmable logic controller, and an embedded micro-controller. Examples of the controller include, but not limited to, the following micro-controllers: ARC 625D, Atmel AT91SAM, Microchip PIC18F26K20 and Silicone Labs C8051F320. A memory controller may also be implemented as a part of control logic of a memory. A person skilled in the art also knows that, in addition to implementing the controller by using pure computer readable program codes, the method steps may undergo logic programming to enable the controller to implement the same functions in a form of a logic gate, a switch, an application specific integrated circuit, a programmable logic controller and an embedded microcontroller. Therefore, this type of controller may be considered as a hardware component, and apparatuses included therein and used for implementing various functions may also be considered as structures inside the hardware component. Or, even the apparatuses used for implementing various functions may be considered as both software modules for implementing the method and structures inside the hardware component.

The system, apparatus, module or unit illustrated in the above embodiments may specifically be implemented by using a computer chip or an entity, or a product having a certain function.

For ease of description, when the apparatus is described, it is divided into various units in terms of functions for respective descriptions. Definitely, when the present application is implemented, functions of all the units may be implemented in the same or multiple software and/or hardware.

Persons skilled in the art should understand that, the embodiments of the present invention may be provided as a method, a system, or a computer program product. Therefore, the present invention may be implemented in the form of a complete hardware embodiment, a complete software embodiment, or an embodiment combining software and hardware. Moreover, the present invention may be in the form of a computer program product implemented on one or more computer usable storage media (including, but not limited to, a magnetic disk memory, a CD-ROM, an optical memory, and the like) including computer usable program code.

The present invention is described with reference to flowcharts and/or block diagrams according to the method, device (system) and computer program product according to the embodiments of the present invention. It should be understood that a computer program instruction may be used to implement each process and/or block in the flowcharts and/or block diagrams and combinations of processes and/or blocks in the flowcharts and/or block diagrams. These computer program instructions may be provided for a general-purpose computer, a special-purpose computer, an embedded processor, or a processor of another programmable data processing device to generate a machine, so that the instructions executed by a computer or a processor of another programmable data processing device generate an apparatus for implementing a specified function in one or more processes in the flowcharts and/or in one or more blocks in the block diagrams.

These computer program instructions may also be stored in a computer readable memory that can instruct the computer or another programmable data processing device to work in a particular manner, such that the instructions stored in the computer readable memory generate an article of manufacture that includes an instruction apparatus. The instruction apparatus implements a specified function in one or more processes in the flowcharts and/or in one or more blocks in the block diagrams.

These computer program instructions may also be loaded onto a computer or another programmable data processing device, such that a series of operating steps are performed on the computer or another programmable device, thereby generating computer-implemented processing. Therefore, the instructions executed on the computer or another programmable device provide steps for implementing a function specified in one or more processes in the flowcharts and/or in one or more blocks in the block diagrams.

In a typical configuration, a computing device includes one or more processors (CPU), an input/output interface, a network interface, and a memory.

The memory may include a volatile memory, a random access memory (RAM) and/or a non-volatile memory or the like in a computer readable medium, for example, a read only memory (ROM) or a flash RAM. The memory is an example of the computer readable medium.

The computer readable medium includes non-volatile and volatile media as well as movable and non-movable media, and can implement information storage by means of any method or technology. Information may be a computer readable instruction, a data structure, and a module of a program or other data. A storage medium of a computer includes, for example, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read only memory (CD-ROM), a digital versatile disc (DVD) or other optical storages, a cassette tape, a magnetic tape/magnetic disk storage or other magnetic storage devices, or another non-transmission medium, and can be used to store information accessible to the computing device. According to the definition of this text, the computer readable medium does not include transitory media, such as a modulated data signal and a carrier.

It should be further noted that, the term "include", "comprise" or other variations thereof are intended to cover non-exclusive inclusion, so that a process, method, commodity or device including a series of elements not only includes the elements, but also includes other elements not clearly listed, or further includes inherent elements of the process, method, commodity or device. Without more limitations, an element defined by "including a/an..." does not exclude that the process, method, commodity or device including the element further has other identical elements.

Those skilled in the art should understand that, the embodiments of the present application may be provided as a method, a system, or a computer program product. Therefore, the present application may be implemented in the form of a complete hardware embodiment, a complete software embodiment, or an embodiment combining software and hardware. Moreover, the present application may employ the form of a computer program product implemented on one or more computer usable storage media (including, but not limited to, a magnetic disk memory, a CD-ROM, an optical memory, and the like) including computer usable program code.

The present application may be described in a common context of a computer executable instruction executed by a computer, for example, a program module. Generally, the program module includes a routine, a program, an object, an assembly, a data structure, and the like used for executing a specific task or implementing a specific abstract data type. The present application may also be implemented in a distributed computing environment, and in the distributed computer environment, a task is performed by using remote processing devices connected through a communications network. In the distributed computing environment, the program module may be located in a local and remote computer storage medium including a storage device.

The embodiments in the specification are all described in a progressive manner. The same or similar parts between the embodiments may be referenced to one another. In each embodiment, the portion that is different from other embodiments is highlighted. Especially, the system embodiment is basically similar to the method embodiment, so that it is described simply, and for related parts, reference is made to the descriptions of the parts in the method embodiment.

The above descriptions are merely embodiments of the present application, and are not intended to limit the present application. For those skilled in the art, the present application may have various modifications and variations. Any modification, equivalent replacement, improvement or the like made within the spirit and principle of the present application should all fall within the scope of claims of the present application.

## Claims

1. A service scenario matching method, comprising:
acquiring user features of access users corresponding to different scenarios and matching features of a to-be-matched product;
calculating a user feature mapping value of each scenario based on the matching features of the to-be-matched product; and
selecting a service scenario of the to-be-matched product according to the user feature mapping values.

2. The method of claim 1, wherein the step of acquiring user features of access users corresponding to different scenarios comprises:
acquiring the user features of the access users corresponding to different scenarios from access records and/or registration information.

3. The method of claim 1, wherein the step of acquiring matching features of a to-be-matched product comprises:
determining the matching features of the to-be-matched product according to a predetermined selection.

4. The method of claim 1, wherein the step of calculating a user feature mapping value of each scenario based on the matching features of the to-be-matched product comprises:
quantifying first user features corresponding to the matching features of the to-be-matched product among the user features of the access users corresponding to different scenarios according to a same standard; and
obtaining the user feature mapping values of the first user features of the different scenarios based on a same mapping rule.

5. The method of claim 1, wherein the step of selecting a service scenario of the to-be-matched product according to the user feature mapping value comprises:
selecting a scenario having a low user feature mapping value as the service scenario of the to-be-matched product; or
selecting a scenario having a high user feature mapping value as the service scenario of the to-be-matched product.

6. The method of claim 1, wherein the step of acquiring matching features of a to-be-matched product comprises:
acquiring the matching features of the to-be-matched product by using a machine learning method.

7. The method of claim 1, wherein the step of calculating a user feature mapping value of each scenario comprises:
obtaining a first mapping manner by using a machine learning method; and
calculating the user feature mapping value of each scenario by using the first mapping manner.

8. The method of claim 6 or 7, wherein the machine learning method comprises at least one of a logistic regression algorithm, a GBDT algorithm, a decision tree algorithm, and a deep learning algorithm.

9. A service scenario matching system, comprising:
an acquisition unit configured to acquire user features of access users corresponding to different scenarios and matching features of a to-be-matched product;
a calculation unit configured to calculate a user feature mapping value of each scenario based on the matching features of the to-be-matched product; and
a selection unit configured to select a service scenario of the to-be-matched product according to the user feature mapping values.

10. The system of claim 9, wherein the acquisition unit comprises a first acquisition unit configured to acquire the user features of the access users corresponding to different scenarios from access records and/or registration information.

11. The system of claim 9, wherein the acquisition unit comprises a second acquisition unit configured to determine the matching features of the to-be-matched product according to a predetermined selection.

12. The system of claim 9, wherein the calculation unit comprises:
a quantification unit configured to quantify first user features corresponding to the matching features of the to-be-matched product among the user features of the access users corresponding to different scenarios according to a same standard; and
a mapping unit configured to obtain the user feature mapping values of the first user features of the different scenarios based on a same mapping rule.

13. The system of claim 9, wherein the selection unit selects a scenario having a low user feature mapping value as the service scenario of the to-be-matched product; or selects a scenario having a high user feature mapping value as the service scenario of the to-be-matched product.

14. The system of claim 9, wherein the acquiring matching features of a to-be-matched product by the acquisition unit comprises acquiring the matching features of the to-be-matched product by using a machine learning method.

15. The system of claim 12, wherein the mapping unit comprises:
a mapping manner obtaining unit configured to obtain a first mapping manner by using a machine learning method; and
a feature value calculation unit configured to calculate the user feature mapping value of each scenario by using the first mapping manner.
